# FASCICULE DE BREVET EUROPEEN

(11) **EP 3 401 925 B1**
(45) Date de publication et mention de la délivrance du brevet: **10.07.2024**
(21) Numéro de dépôt: 18170939.5
(22) Date de dépôt: 04.05.2018
(51) Int. Cl.: B66F 9/06, G21F 5/06, G21F 5/14

(54) **CHARIOT DE MANIPULATION D'UN CONTENEUR EN VUE DE SA CONNEXION À UN ISOLATEUR**
WAGEN ZUR HANDHABUNG EINES BEHÄLTERS IM HINBLICK AUF SEINE VERBINDUNG MIT EINEM ISOLATOR
CART FOR MANIPULATING A CONTAINER WITH REGARD TO HIS CONNECTION TO AN ISOLATOR

(30) Priorité: 09.05.2017 FR 1754062
(43) Date de publication de la demande: 14.11.2018
(73) Titulaire: Getinge Life Science France, 41100 Vendôme (FR)
(72) Inventeur: GIBOYAU, Mathieu, 41100 VENDÔME (FR); DANIEL, Wenceslas, 41350 VINEUIL (FR)
(74) Mandataire: Brevalex

(56) Documents cités:
- CN-U- 204 190 775
- FR-A1- 2 722 607
- JP-A- H0 986 892

## Description

### DOMAINE TECHNIQUE ET ÉTAT DE LA TECHNIQUE ANTÉRIEURE

La présente invention se rapporte à un chariot de manipulation de conteneur en vue de sa connexion étanche à un isolateur et à un système comportant un tel chariot.

Dans un certain nombre de secteurs industriels, parmi lesquels on citera les secteurs nucléaire, médical et, pharmaceutique, il est nécessaire ou souhaitable d'effectuer certaines tâches dans une atmosphère confinée, soit afin de protéger le personnel, par exemple de la radioactivité, de la toxicité..., soit au contraire de pouvoir effectuer ces tâches dans une atmosphère aseptique ou exempte de poussière, soit enfin les deux simultanément, par exemple dans le cas préparations injectables de médicaments anticancéreux.

Or le transfert d'appareil ou de produit d'un volume clos à l'autre, sans qu'à aucun moment l'étanchéité de chacun de ces volumes vis-à-vis de l'extérieur ne soit rompue, pose un problème délicat à remplir. Ce problème peut être résolu par un dispositif de connexion à double porte ou RTP (Rapid Transfer Port en terminologie anglo-saxonne).

Un tel dispositif à double porte muni d'une commande à multiples sécurités est par exemple connu du document FR 2 695 343. Chaque volume est clos par une porte montée dans une bride. Chaque porte est solidarisée à sa bride par une liaison baïonnette et les deux brides sont destinées à être solidarisées l'une à l'autre par une liaison baïonnette.

Dans le cas où l'un des volumes clos est formé par un conteneur et l'autre volume par une boîte à gants, une partie du dispositif à double porte est portée par la boîte à gants, désigné partie alpha, et une partie du dispositif à double porte est portée par le conteneur, désignée partie beta.

Le transfert s'effectue de la manière suivante. La bride de la partie beta comporte sur sa périphérie extérieure des oreilles destinées à coopérer avec une empreinte de la bride de la partie alpha. La bride de la partie beta est introduite dans la bride de la partie alpha, le conteneur est orienté de sorte à faire correspondre les oreilles avec l'empreinte. Une première rotation du conteneur suivant l'axe de sa porte permet de solidariser la bride de la partie beta à la bride de la partie alpha par la liaison baïonnette. Au moyen d'une deuxième rotation du conteneur, suivant le même axe et en continuité avec la première rotation, la porte du conteneur est pivotée par rapport au conteneur, assurant à la fois une solidarisation par une autre liaison baïonnette avec la porte de la boîte à gant et une désolidarisation du nouvel ensemble formé par les deux portes accolées vis-à-vis des brides de porte et de boîte à gant.

La mise en place du conteneur et sa rotation sont souvent réalisées de façon manuelle par l'utilisateur, ce qui peut être problématique dans les cas où la masse du conteneur à manipuler est importante, dans le cas où la configuration de l'installation ne permet pas à l'utilisateur d'opérer facilement, par exemple du fait de l'accès difficile à la partie Alpha, du fait d'un manque de visibilité pour permettre à l'utilisateur de positionner la partie Beta, puis de la connecter sur la partie alpha. Cette difficulté d'accès et ce manque de visibilité apparaissent notamment lorsque la partie alpha est à l'horizontale dans le fond d'une boîte à gants ou d'un isolateur, et que le conteneur muni de la partie beta est disposé sous la boîte à gant. L'utilisateur doit alors accéder sous la boîte à gants pour effectuer les différentes opérations.

Par ailleurs, il arrive que ces opérations de positionnement, connexion, déconnexion soient réalisées à une fréquence élevée par l'utilisateur.

Le document EP 1940 565 décrit un système pour transférer les déchets d'un isolateur vers un conteneur, la zone d'évacuation des déchets et de connexion au conteneur étant située dans le fond de l'isolateur, le conteneur venant alors se positionner sous l'isolateur au droit de la zone d'évacuation et de connexion. Pour cela, le conteneur est disposé sur un chariot pour être placé sous l'isolateur. Le chariot comporte des moyens pour élever le conteneur et faire coopérer les parties alpha et beta.

La partie beta comporte des pions en saillie radialement et la partie alpha comporte des encoches pour recevoir les pions. Le conteneur est disposé approximativement au droit de la zone d'évacuation de connexion, l'opérateur doit estimer par lui-même si le conteneur est correctement positionné. Par ailleurs, les pions ne sont pas nécessairement directement alignés avec les encoches. Des rampes de guidage sont alors prévues pour guider les pions jusqu'aux encoches et le conteneur est monté rotatif sur le chariot afin de permettre aux pions de suivre les rampes de guidage.

Il résulte de ce dispositif une certaine incertitude lors de la connexion. En effet si le conteneur n'est pas disposé suffisamment au droit de la zone d'évacuation et de connexion, la connexion ne peut se faire. Le conteneur doit être alors abaissé et sa position doit être modifiée. Il en résulte en outre un risque d'endommagement des différents composants et une diminution de la fréquence de connexion, déconnexion.

En outre la connexion requiert à la fois une structure particulière de la zone d'évacuation et de connexion avec des rampes de guidage et un chariot sur lequel le conteneur pivote librement pour permettre aux pions de s'aligner. En outre ce chariot n'est adapté qu'au cas où la connexion se fait au moyen de pions radiaux. Cette structure n'est pas adaptée par exemple pour une connexion au moyen d'oreilles.

FR2722607 divulgue un chariot élévateur à ciseaux mobile sur roues. Ce chariot comporte un plateau rotatif qui supporte un conteneur. Le conteneur est fixé au plateau support par de petits jarrets.

### EXPOSÉ DE L'INVENTION

C'est par conséquent un but de la présente invention d'offrir un chariot de manipulation d'au moins un conteneur en vue de leur connexion à un isolateur ou une boîte à gants permettant une connexion plus rapide et plus sûre qu'avec les chariots de l'état de la technique.

Le but énoncé ci-dessus est atteint par un ensemble comportant au moins un conteneur et un chariot de manipulation dudit au moins un conteneur en vue de sa connexion étanche à un isolateur par des moyens de connexion étanche, ledit isolateur comportant des parois, un fond inférieur et une structure support de sorte que le fond inférieur soit à distance du sol, lesdits moyens de connexion étanche comportant une première partie sur le conteneur et une deuxième partie dans le fond inférieur de l'isolateur, ledit conteneur comportant un récipient d'axe longitudinal muni à une extrémité longitudinale d'une ouverture bordée d'une bride et fermée de manière étanche par une porte, ladite bride présentant un axe confondu avec l'axe longitudinal du conteneur, la bride et la porte formant la première partie des moyens de connexion étanche, ledit chariot comportant un plateau support configuré pour supporter le conteneur de sorte que l'axe longitudinal du conteneur et l'axe de la bride soient orientés le long d'une direction verticale, des moyens permettant le déplacement du chariot par rapport au sol, des moyens de levage le long de la direction verticale du conteneur pour faire accoster le conteneur à l'isolateur, des premiers moyens d'indexation en position du chariot par rapport à l'isolateur configurés pour coopérer avec des deuxièmes moyens d'indexation en position portés par la structure support de l'isolateur pour fixer la position du chariot dans le plan horizontal, de sorte que la première partie des moyens de connexion étanche portés par le conteneur et la deuxième partie des moyens de connexion étanche portés par le fond inférieur de l'isolateur soient alignés le long de la direction verticale, le chariot comportant un logement configuré pour loger une extrémité longitudinale du conteneur opposée à celle comportant la bride, ledit logement étant mobile en rotation par rapport au plateau support et ledit logement comportant des moyens d'orientation angulaire configurés pour fixer l'orientation angulaire du conteneur autour de la direction longitudinale du conteneur par rapport au chariot de sorte que la position du conteneur sur le chariot ne soit pas aléatoire.

Ainsi lorsque le conteneur est disposé sous l'isolateur, d'une part la partie beta est directement au droit de la partie alpha, aucun ajustement de la part de l'utilisateur n'est requis. D'autre part, les moyens de connexion de la partie beta sont directement alignés avec les moyens de connexion de la partie alpha. Aucune moyen de guidage, ni de rotation du conteneur ne sont requis pour obtenir cet alignement.

En d'autres termes, le chariot dont sa position par rapport à l'isolateur est déterminée, impose une orientation angulaire au conteneur afin qu'il soit prêt à accoster la partie alpha. La connexion entre l'isolateur et le conteneur est sûre et peut alors être rapide. La fréquence de connexion peut être augmentée. De plus les risques d'endommagement sont réduits.

Dans un exemple de réalisation, le chariot comporte des moyens pour mettre en rotation le conteneur afin de réaliser la connexion entre les parties alpha et beta. Avantageusement cette rotation est empêchée tant que la partie beta n'est pas accostée sur la partie alpha.

Le chariot comporte des moyens d'élévation du conteneur. Dans un exemple ces moyens sont formés par des vérins. Avantageusement le chariot comporte des moyens limiteurs de couple afin d'interrompre l'élévation du conteneur lorsque la partie beta a accosté la partie alpha.

La présente invention a alors pour objet un ensemble comportant au moins un conteneur et un chariot de manipulation dudit au moins un conteneur en vue de sa connexion étanche à un isolateur par des moyens de connexion étanche, ledit isolateur comportant des parois, un fond inférieur et une structure support de sorte que le fond inférieur soit à distance du sol, lesdits moyens de connexion étanche comportant une première partie sur le conteneur et une deuxième partie dans le fond inférieur de l'isolateur, ledit conteneur comportant un récipient d'axe longitudinal muni à une extrémité longitudinale d'une ouverture bordée d'une bride et fermée de manière étanche par une porte, ladite bride présentant un axe confondu avec l'axe longitudinal du conteneur, la bride et la porte formant la première partie des moyens de connexion étanche, ledit chariot comportant un plateau support configuré pour supporter le conteneur de sorte que l'axe longitudinal du conteneur et l'axe de la bride soient orientés le long d'une direction verticale, des moyens permettant le déplacement du chariot par rapport au sol, des moyens de levage le long de la direction verticale du conteneur pour faire accoster le conteneur à l'isolateur, des premiers moyens d'indexation en position du chariot par rapport à l'isolateur configurés pour coopérer avec des deuxièmes moyens d'indexation en position portés par la structure support de l'isolateur pour fixer la position du chariot dans le plan horizontal, de sorte que la première partie des moyens de connexion étanche portés par le conteneur et la deuxième partie des moyens de connexion étanche portés par le fond inférieur de l'isolateur soient alignés le long de la direction verticale, le chariot comportant un logement configuré pour loger une extrémité longitudinale du conteneur opposée à celle comportant la bride, ledit logement étant mobile en rotation par rapport au plateau support et ledit logement comportant des moyens d'orientation angulaire configurés pour fixer l'orientation angulaire du conteneur autour de la direction longitudinale du conteneur par rapport au chariot de sorte que la position du conteneur sur le chariot ne soit pas aléatoire.

Selon une caractéristique additionnelle avantageuse, le chariot comporte des moyens empêchant la mise en rotation du conteneur tant que le conteneur n'a pas accosté l'isolateur. Ces moyens empêchant la mise en rotation du conteneur peuvent comporter une butée en rotation destinée à coopérer avec ledit logement, ladite butée étant par exemple telle qu'elle est escamotée lorsque le conteneur est dans sa position d'accostage.

Selon une autre caractéristique additionnelle avantageuse, le chariot peut comporter des moyens empêchant le conteneur de s'écarter de sa position d'accostage tant qu'il n'ait pas dans un état de connexion ou un état de déconnexion. Les moyens empêchant le conteneur de s'écarter de sa position d'accostage peuvent comporter une butée verticale empêchant le logement de s'abaisser s'il n'est pas dans une position, dans laquelle le conteneur est connecté ou est déconnecté.

Des butées angulaires limitant la rotation du conteneur lors d'une phase de connexion ou une phase de déconnexion peuvent avantageusement être prévues.

Les moyens de levage comportent de manière préférée des moyens limiteurs de couple de sorte à interrompre le levage du conteneur dès lors que le conteneur est accosté sur l'isolateur.

Le chariot de manipulation peut également comporter des moyens de maintien du conteneur sur le chariot. Ces moyens de maintien comportent par exemple des moyens aptes à exercer un effort de serrage sur le conteneur en direction du plateau support. Dans un exemple de réalisation, ces moyens aptes à exercer un effort de serrage comportent un plateau de serrage destiné venir en appui sur une extrémité supérieure du conteneur et des moyens pour fixer la position du plateau de maintien de sorte qu'il exerce un effort de serrage.

Le plateau support peut avantageusement comporter des moyens élastiques destinés à supporter au moins en partie le conteneur.

Les moyens d'orientation angulaire comportant par exemple au moins une encoche et au moins un ergot, l'encoche ou l'ergot étant porté par le logement et l'ergot ou l'encoche étant porté par le conteneur.

La présente invention a également pour objet une installation comportant un isolateur muni d'un zone de connexion disposée horizontalement et suspendue au-dessus du sol par une structure support et au moins un ensemble selon la présente invention, ladite structure support portant les deuxièmes moyens d'indexation en position configurés pour coopérer avec les premiers moyens d'indexation en position portés par le chariot, de sorte que, lorsque les premiers moyens d'indexation coopèrent avec les deuxièmes moyens d'indexation, le conteneur soit aligné avec la zone de connexion.

### BRÈVE DESCRIPTION DES DESSINS

La présente invention sera mieux comprise sur la base de la description qui va suivre et des dessins en annexe sur lesquels :
- la figure 1 est une vue en perspective représentant un exemple de réalisation d'un chariot selon l'invention, transportant un conteneur, au cours d'une mise en place sous un isolateur,
- la figure 2 est une vue de côté du chariot de la figure 1, avec le conteneur,
- la figure 3A est une vue d'un autre côté du chariot de la figure 2,
- la figure 3B est une vue similaire à celle de la figure 3A, le chariot étant dans une autre configuration,
- la figure 4 est une vue de détail du plateau du chariot de la figure 2, le conteneur étant représenté en transparence,
- la figure 5 est une vue de détail de la structure support de l'isolateur,
- la figure 6 est une vue de côté des moyens de levage du chariot représentés seuls,
- les figures 7A et 7B sont des vues en perspective d'une partie des éléments du chariot dans une position basse et dans une position haute respectivement,
- les figures 8A et 8B sont des vues en perspective de détail d'une partie des éléments du chariot, dans une position basse et dans une position haute respectivement, le logement et le conteneur étant représentés en plus par rapport au figures 7A et 7B,
- la figure 9 est une vue de côté de certains élément du chariot dans un état intermédiaire entre un état connecté et un état déconnecté,
- les figures 10A et 10B sont des représentations en perspective de moyens de maintien du conteneur sur le chariot dans deux positions différentes,
- la figure 11 est une vue en coupe représentée en perspective d'une partie du chariot au niveau du logement du fond du conteneur,
- les figures 12A à 12C sont des vues de derrière du chariot et du conteneur et des vues de dessus du chariot et du conteneur, l'isolateur étant représenté en transparence, lors d'une opération de connexion.

### EXPOSÉ DÉTAILLÉ DE MODES DE RÉALISATION PARTICULIERS

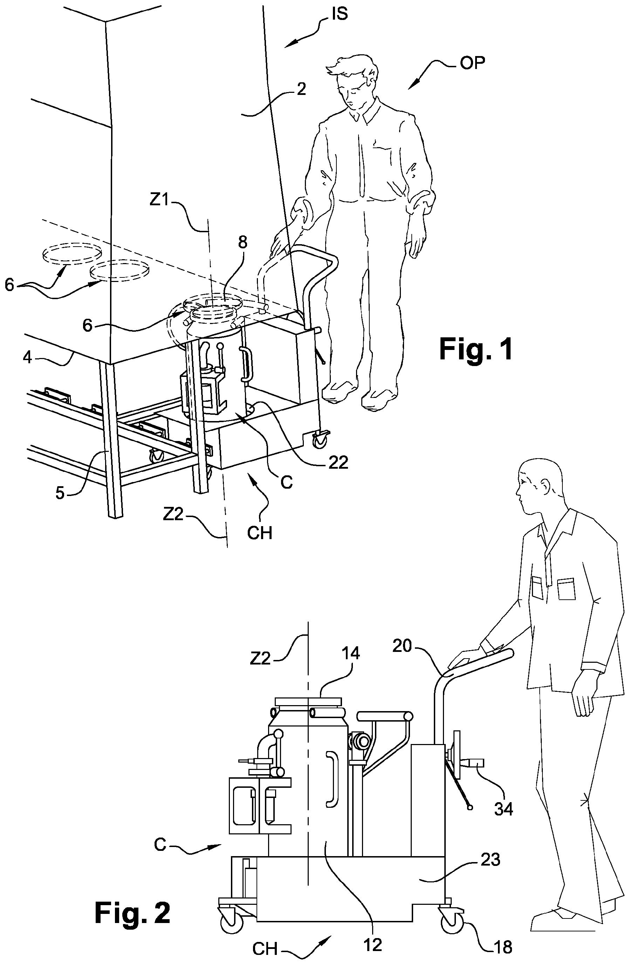

Sur la figure 1, on peut voir un exemple de réalisation d'un chariot CH selon l'invention transportant un conteneur C en vue d'une connexion à un isolateur IS.

L'isolateur IS peut être par exemple une boîte à gants.

L'isolateur IS comporte des parois 2 et un fond inférieur 4 muni de plusieurs zones 6 munie chacune d'une partie alpha permettant de connecter des conteneurs et de faire communiquer de manière étanche le volume intérieur de l'isolateur IS et le volume intérieur du conteneur. L'isolateur est supporté par une structure 5 de sorte que son fond inférieur soit à distance du sol.

Un système de connexion étanche, également appelé système à double porte, est réparti entre le conteneur et l'isolateur. Il comporte des parties, dites alpha, équipant les zones 6 et portées par l'isolateur et une partie beta portée par le conteneur.

Chaque zone 6 comporte une ouverture 8 entourée par une bride et fermée par une porte de manière étanche. La bride et la porte forment la partie alpha.

Les parties alpha et beta ont des formes sensiblement de révolution. La partie alpha s'étend autour d'un axe longitudinal Z1.

Le conteneur comporte un récipient 12 d'axe longitudinal Z2 muni d'une ouverture bordée par une bride et fermée de manière étanche par une porte 14, la bride et la porte forment la partie beta. L'axe de la partie beta est confondu avec l'axe Z2.

Lors de la connexion du conteneur à l'isolateur, l'axe longitudinal Z2 est destiné à être orienté verticalement et les axes Z1 et Z2 sont coaxiaux.

La connexion entre la partie beta et une partie alpha est obtenue en accostant la partie beta sur la partie alpha et en appliquant un mouvement de rotation relatif entre la partie alpha et la partie beta, de sorte à assurer une solidarisation des brides par exemple par une connexion baïonnette, une solidarisation des portes entre elles, par exemple par une connexion baïonnette, et une libération des portes par rapport aux brides.

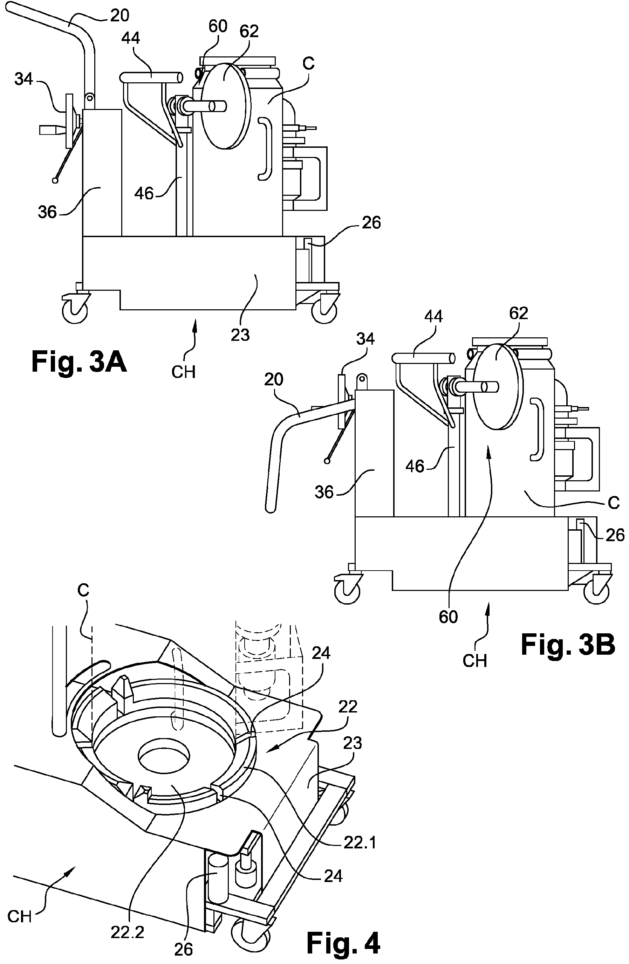

Sur les figures 2, 3A, 3B, on peut voir le chariot CH supportant le conteneur C pour le déplacer et le disposer sous l'isolateur ou pour l'éloigner de l'isolateur et l'emmener dans une zone de stockage par exemple. Le chariot est déplacé par un opérateur OP.

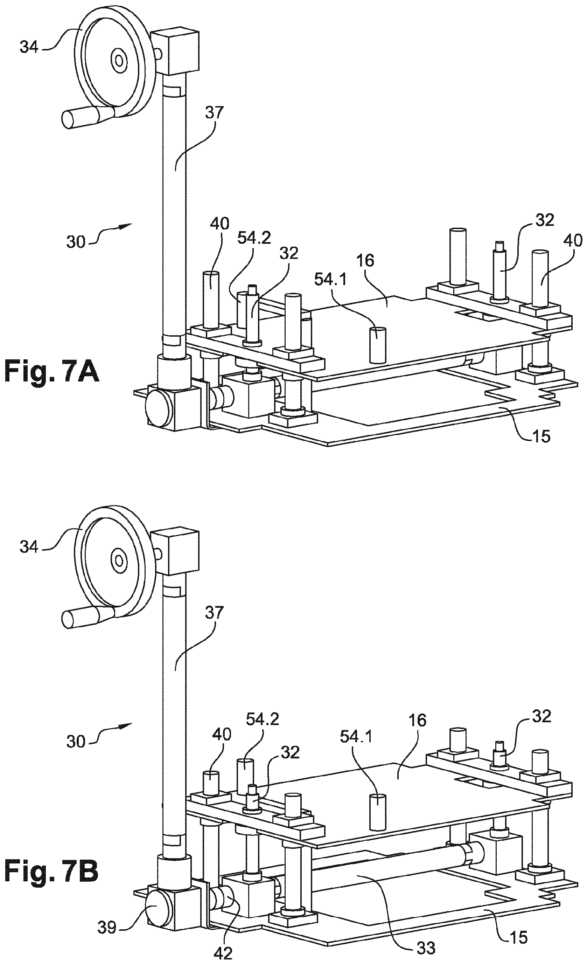

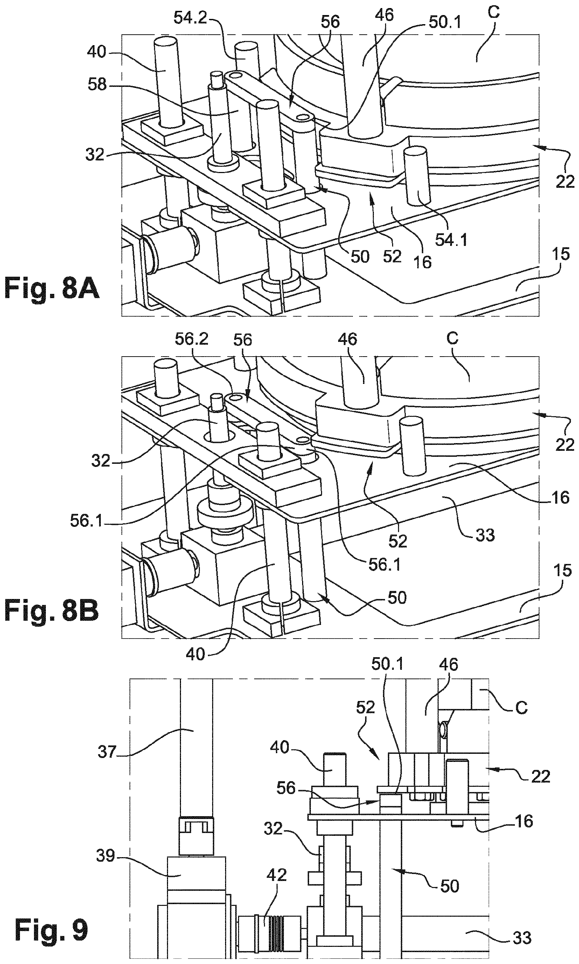

Le chariot comporte un châssis 15, visible sur les figures 7A, 7B, 8A et 8B, des roues 18 permettant le déplacement du chariot sur le sol, une poignée 20 destinée à être saisie par l'opérateur pour déplacer le chariot. Avantageusement la poignée 20 peut prendre au moins deux positions, une position relevée (figure 3A) pour le déplacement du chariot et une position rabattue (figure 3B) pour faciliter l'accès aux moyens permettant l'accostage et la connexion. Le chariot comporte également un plateau support 16, visible sur les figures 7A, 7B, 8A et 8B, destiné à supporter le conteneur C.

Un carénage 23 comportant des parois latérales et une paroi supérieure est également prévu pour masquer les différents éléments mobiles. Il permet de limiter les risques de blessure. En outre, il rend le système adapté aux environnements pharmaceutiques, en garantissant la nettoyabilité du système et en limitant l'émission éventuelle de particules générées par les systèmes mécaniques.

Dans la description, la partie arrière du chariot désignera la partie munie de la poignée et la partie avant du chariot désignera la partie du chariot opposée à la partie avant par rapport à la zone recevant le conteneur.

Par ailleurs, le déplacement du chariot pourrait être assisté par un moteur électrique ou être entièrement motorisé avec ou sans guidage par un utilisateur. Il pourrait être envisagé que le chariot se déplace sur des rails entre l'isolateur et un zone de chargement du conteneur.

Sur la figure 4, on peut voir en détail le chariot vu de dessus. Le chariot comporte un logement 22 en creux dont le forme correspond à la section transversale du fond inférieur du conteneur et destiné à recevoir le fond inférieur du conteneur. Le logement 22 comporte une paroi latérale 22.1 et un fond 22.2, sur lequel le conteneur est destiné à reposer.

La paroi supérieure du carénage 23 est munie d'une ouverture recevant à coulissement le logement 22.

Le logement 22 comporte des moyens d'orientation angulaire du conteneur C par rapport au chariot CH de sorte que la position angulaire du conteneur sur le chariot soit déterminée et ne soit pas aléatoire.

Dans l'exemple représenté, les moyens d'orientation comportent au moins une encoche 24 formée dans la paroi latérale 22.1 du logement 22 et destinée à recevoir un ergot (non visible) faisant saillie radialement de la partie inférieure du conteneur. Ces moyens d'orientation sont prévus de sorte que le conteneur C, et notamment sa partie beta, ait l'orientation voulue pour l'accostage à la partie alpha.

De manière avantageuse, les moyens d'orientation comportent plusieurs encoches afin de pouvoir orienter le conteneur selon différents angles, et ainsi s'adapter à différentes configurations de partie beta et/ou d'isolateur. Pour éviter une confusion pour l'utilisateur, l'encoche à utiliser peut être repérée par une indication visuelle, telle qu'une couleur, une ou des lettres, un ou des chiffres, ou les encoches à ne pas utiliser peuvent être masquées.

La coopération entre l'encoche et l'ergot transmet la rotation du logement au conteneur. Néanmoins en général, le poids du conteneur est suffisant pour qu'il y ait suffisamment de frottement entre le fond du logement et le fond du conteneur et que la rotation du logement s'applique directement au conteneur.

En variante, on pourrait envisager que la paroi latérale 22.1 du logement 22 comporte un ergot en saillie radialement vers l'intérieur et que la partie inférieure du conteneur comporte une encoche adaptée à recevoir l'ergot. En variante encore, on peut envisager que les moyens d'orientation soient par exemple électriques, électroniques, optiques ou magnétiques.

En outre, le chariot CH comporte des moyens pour indexer sa position par rapport à l'isolateur IS, notamment par rapport à la partie beta, de sorte à assurer la disposition de la partie beta au droit ou à l'aplomb de la partie alpha, i.e. de sorte que l'axe Z1 de la partie alpha et l'axe Z2 de la partie beta soient coaxiaux.

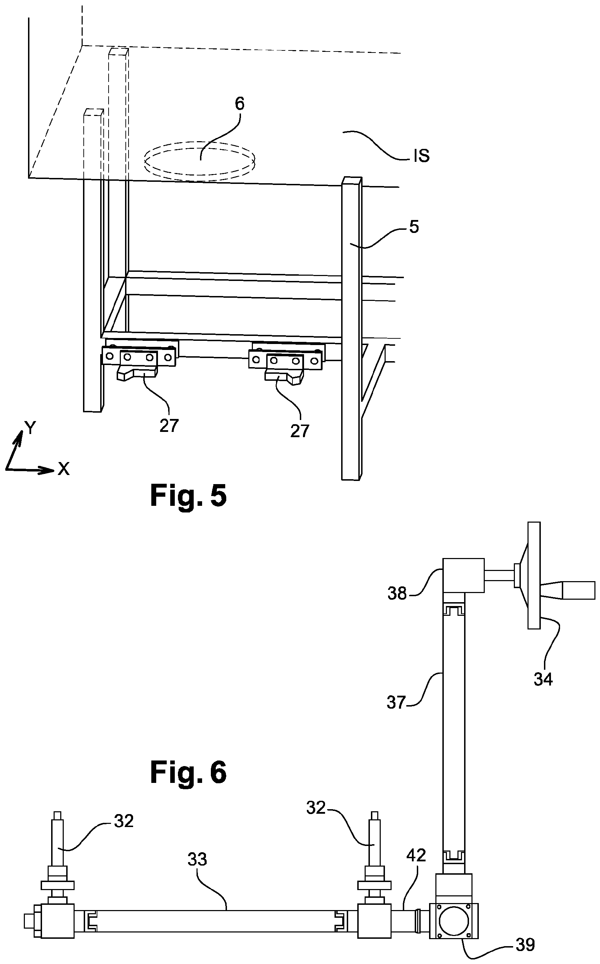

Dans l'exemple représenté, la partie avant du chariot CH comporte deux tiges 26 orientées verticalement et disposées chacune sur un côté du chariot et la structure support de l'isolateur comporte des moyens d'indexation en position du chariot destinés à recevoir les deux tiges 26. Sur la figure 5, on peut voir un exemple de moyens d'indexation comportant deux platines 27, chacune ménageant un logement destiné à entourer partiellement une tige 26. Dans l'exemple représenté, les logements sont orientés l'un vers l'autre. En variante, ils pourraient être orientés vers l'extérieur. Ces moyens d'indexation fixent la position du chariot CH dans le plan, à la fois le long de la direction X et le long de la direction Y.

Le chariot peut préférentiellement comporter des freins pour immobiliser le chariot par rapport à l'isolateur pendant les étapes d'accostage et de connexion.

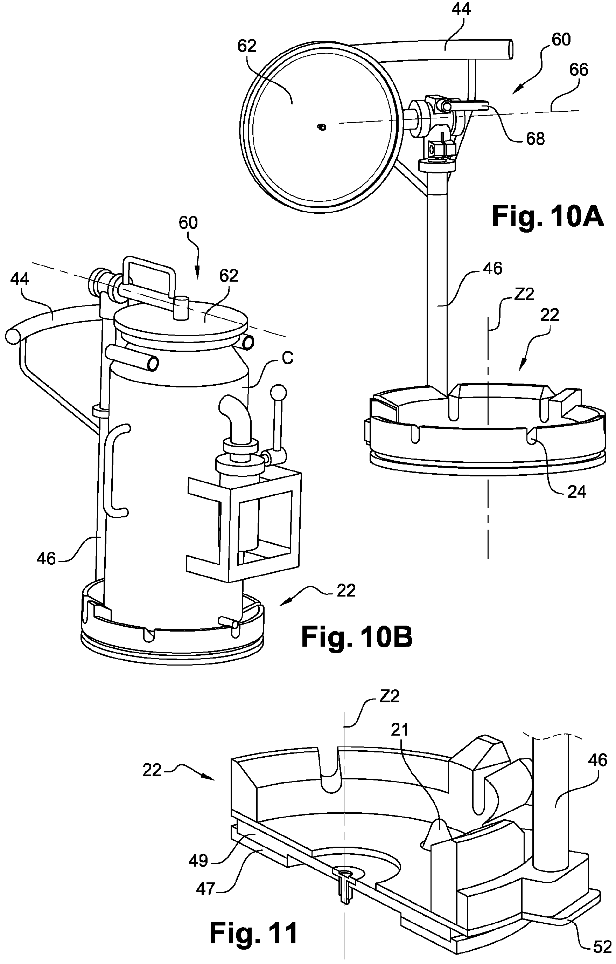

De manière avantageuse, le fond 22.1 du logement 22 comporte des plots 21 en matériaux élastique (figure 11), par exemple en caoutchouc, permettant de corriger d'éventuels défauts de planéité du sol et assurer que la partie beta soit sensiblement horizontale.

Le chariot comporte des moyens pour déplacer le conteneur le long de l'axe vertical de sorte à faire accoster la partie beta sur la partie alpha.

Dans l'exemple représenté, le logement 22 est mobile verticalement.

Sur les figures 7A, 7B, 8A et 8B, on peut voir une vue du chariot sans le carénage 23. Le plateau support 16 supporte le logement 22 et est apte à être déplacé verticalement par des moyens de levage 30.

Les moyens de levage, représentés seuls sur la figure 6, comportent, dans l'exemple représenté, deux vérins à vis tournante 32, l'un à l'arrière du chariot et l'autre à l'avant du chariot CH et un volant 34 dont la rotation provoque soit l'extension, soit la rétractation des vérins. Les deux vérins 32 sont reliés mécaniquement par un premier arbre de transmission 33, de sorte que les deux vérins aient des déplacements simultanés et que le plateau support 16 se déplace sensiblement horizontalement. Dans cet exemple et de manière avantageuse, le volant 34 est situé sensiblement au niveau de la poignée et est supporté par une colonne 36 de sorte à être à une hauteur facilement accessible pour l'utilisateur. En outre, le volant 34 est avantageusement orienté de sorte que son axe de rotation soit horizontal, réduisant l'encombrement de l'ensemble, améliorant l'ergonomie et évitant les interactions entre le volant 34 et la poignée 20. La colonne 36 est traversée par un deuxième arbre de transmission 37 qui est connecté mécaniquement au volant 34 et au premier arbre de transmission 33 par des renvois d'angle 38, 39 respectivement. Avantageusement un multiplicateur de vitesse est prévu entre le deuxième arbre de transmission 33 et le premier arbre de transmission 37. En variante, le volant 34 peut avoir son axe de rotation vertical et être en prise direct avec le deuxième arbre de transmission 37 ; dans ce cas le renvoi d'angle 38 est omis. Dans l'exemple représenté, le chariot comporte avantageusement quatre colonnes de guidage 40, orientées verticalement, traversant le plateau sensiblement à ses quatre coins de sorte à guider le plateau lors de ses déplacements verticaux.

De manière très avantageuse, les moyens de levage comportent un limiteur de couple 42 de sorte à désolidariser le premier 33 et le deuxième 37 arbre de transmission, dès que le couple dépasse un seuil donné, le dépassement de ce seuil résultant de l'accostage de la partie beta sur la partie alpha. Ainsi l'accostage est sécurisé, il peut par exemple être réalisé par une personne non expérimentée, et les risques d'endommagement sont réduits.

En variante, cette fonction de sécurité pourrait être réalisée au moyen d'un capteur de présence situé au niveau de la partie alpha ou beta, et provoquant soit une alarme lumineuse ou sonore pour prévenir l'opérateur de stopper le levage du conteneur, soit une désolidarisation des deux arbres de transmission. La mise en oeuvre d'un limiteur de couple mécanique présente les avantages d'un système robuste et ne pouvant pas être ignoré comme pourrait l'être au contraire une alarme, par exemple par une personne non expérimentée.

Les vérins à vis tournante 32 pourraient être remplacés par des vérins pneumatiques ou hydrauliques, néanmoins les vérins hydrauliques peuvent entraîner des pollutions. En variante encore, les moyens de levage pourraient être de type à ciseaux.

Dans cet exemple de réalisation, la connexion des parties alpha et beta est obtenue par rotation du conteneur autour de l'axe Z2. Pour cela, le chariot CH comporte des moyens pour mettre en rotation le conteneur autour de l'axe Z2. Dans l'exemple représenté, le logement 22 est monté mobile en rotation par rapport au plateau support 16. Sur la figure 11, on peut voir une vue en coupe représentée en perspective de la zone du chariot supportant logement 22. Le chariot comporte une pièce 47 fixe en rotation, une pièce 49 mobile en rotation autour de l'axe Z2 à laquelle est fixé le fond du logement 22. De manière avantageuse, la pièce 47 est de forme annulaire de sorte à limiter la surface de frottement avec la pièce 49.

Le déplacement en rotation est obtenu au moyen d'une poignée de connexion 44 solidarisée en rotation au logement 22. Avantageusement, la poignée 44 est disposée en haut d'une colonne 46 de sorte à être à la hauteur de l'utilisateur. La colonne 46 est fixée à une saillie radiale 52 du fond 22.1 du logement 22, afin de pouvoir l'entraîner en rotation autour de l'axe Z.

Par exemple, la poignée 44 est située en avant de la poignée de déplacement 20, et est facilement accessible lorsque la poignée de déplacement 20 est rabattue.

De manière très avantageuse, le chariot comporte des moyens empêchant la rotation du conteneur tant que la partie beta n'a pas accostée la partie alpha. Dans l'exemple représenté, ces moyens empêchent la rotation du logement autour de l'axe Z2 tant que la partie beta n'a pas accostée la partie alpha, i.e. tant que le logement n'est pas dans une position de levage correspondant à cet accostage.

De manière avantageuse, les moyens empêchant la rotation du conteneur comportent une butée 50 fixée sur le châssis 15 et disposée à proximité et à l'extérieur de la paroi latérale 22.1 du logement.

La butée 50 comporte une tige et une extrémité supérieure 50.1 opposée à une extrémité inférieure fixée sur le châssis 15, qui est située à une hauteur déterminée le long de l'axe Z2 de sorte que, lorsque le conteneur C est dans sa position de levage correspondant à l'accostage, l'extrémité supérieure 50.1 de la butée ne fasse pas saillie du plateau support 16 et n'empêche plus la rotation. En revanche, tant que le plateau support 16 et donc le logement et le conteneur sont dans une position en-deçà de la position d'accostage, la butée 50 empêche la rotation du conteneur. Comme nous le verrons par la suite, le chariot comporte avantageusement une butée verticale qui se confond en partie avec l'extrémité supérieure 50.1 de la butée 50.

Le chariot comporte avantageusement des moyens pour limiter le déplacement angulaire du conteneur de sorte à ne pas forcer sur les parties beta et alpha. Dans l'exemple représenté, ils comportent deux butées angulaires, un butée angulaire de déconnexion 54.1 et une butée radiale de connexion 54.2, fixées sur le plateau et formant entre elles l'angle nécessaire à la connexion ou déconnexion des parties alpha et beta, par exemple 60°. Avantageusement, les butées angulaires 54 coopèrent avec la saillie radiale 52. Par conséquent, à l'état de déconnexion, la saillie radiale 52 est en appui contre la butée radiale de déconnexion 54.1 et, à l'état de connexion, la saillie radiale 52 est en appui contre la butée angulaire de connexion 54.2. Cette réalisation limite le nombre d'éléments à mettre en oeuvre en attribuant deux fonctions à la butée 50. Il sera compris cependant qu'un chariot mettant en oeuvre une butée différente pour coopérer avec les butées angulaires ne sort pas du cadre de la présente invention.

De manière également très avantageuse, le chariot comporte des moyens empêchant d'abaisser le conteneur tant que celui-ci n'a pas atteint sa position de connexion complète ou sa position de déconnexion complète. Ces moyens comportent une butée verticale 56 pour le logement 22, tant qu'il se trouve dans une position angulaire intermédiaire entre les états de connexion et de déconnexion. Dans l'exemple représenté et de manière avantageuse, ces moyens mettent en oeuvre la saillie radiale 52 du logement 22 et la butée verticale 56 s'étendant horizontalement et angulairement autour du logement entre la butée 50 et une autre tige 58 qui sert de support.

La butée verticale 56 comporte deux extrémités angulaires 56.1, 56.2, la distance entre l'extrémité angulaire 56.1 et la butée angulaire de déconnexion 54.1 correspond sensiblement à l'extension angulaire de la saillie radiale 52, de même la distance entre l'extrémité angulaire 56.2 et la butée angulaire de connexion 54.2 correspond sensiblement à l'extension angulaire de la saillie radiale 52. Dans cet exemple de réalisation, l'extrémité angulaire 56.1 de la butée radiale 56 forme l'extrémité supérieure 50.1 de la butée 50. Dans une variante ne comportant pas de butée verticale, l'extrémité supérieure 50.1 serait formée par l'extrémité libre de la tige de la buté 50.

Dans cet exemple, l'extrémité libre de la butée 50 est formée par la butée verticale 56. Mais il pourrait être prévu qu'elles soient distinctes.

Il sera compris que, selon un autre exemple de réalisation, les moyens assurant une connexion et une déconnexion sécurisées peuvent mettre en oeuvre des capteurs mécaniques, électriques, optiques, électroniques..., notamment dans le cas d'un chariot tout ou partie motorisé. Les signaux émis par les capteurs autorisent alors ou non le déplacement vertical du conteneur et/ou la rotation du conteneur. Les étapes de connexion et de déconnexion peuvent alors être automatisées. Selon encore un autre exemple, des capteurs peuvent être associés aux moyens mécaniques.

Le chariot comporte également, de manière très avantageuse, des moyens de maintien 60 du conteneur sur le chariot afin d'éviter un basculement de celui-ci, par exemple du fait d'un sol accidenté ou d'une collision.

Dans l'exemple représenté, les moyens de maintien 60 comportent des moyens pour appliquer une force de serrage verticale au conteneur et venir le plaquer contre le fond du logement. Dans l'exemple représenté, les moyens de maintien 60 comportent un plateau de maintien 62 monté sur la colonne de la poignée de déplacement et destiné à venir en appui plan sur la partie beta du conteneur C.

D'une part, le plateau de maintien 62 est mobile verticalement pour pouvoir ajuster sa position verticale à la hauteur du conteneur et effectivement appliquer une force de serrage. D'autre part, le plateau de maintien est avantageusement mobile en rotation autour d'un axe vertical afin de permettre d'aligner le plateau de maintien 62 avec l'axe du conteneur Pour cela, il est par exemple prévu que la colonne soit télescopique en au moins deux parties, dont les deux parties peuvent coulisser l'une par rapport à l'autre le long d'un axe vertical et peuvent pivoter l'une par rapport à l'autre autour de l'axe vertical. Un moyen d'indexation, par exemple une molette, fixe à la fois la position le long et autour de l'axe vertical des deux parties de la colonne pour fixer la longueur de la colonne.

De manière avantageuse, le plateau de maintien 62 peut pivoter de sorte à prendre une position verticale afin de dégager l'accès au conteneur et ne pas gêner la mise en place sous l'isolateur. Pour cela le plateau de maintien 62 est relié à la colonne par une liaison pivot d'axe horizontal 66. Une manette 68 permet d'immobiliser de le plateau de maintien 62 au moins dans une position verticale ou une position horizontale.

Le fonctionnement du chariot va maintenant être décrit.

L'opérateur souhaite connecter le conteneur C sur l'isolateur IS.

Tout d'abord, il dispose le conteneur C dans le logement 22 du chariot CH, le conteneur est automatiquement orienté angulairement de manière correcte en disposant l'ergot du conteneur dans l'encoche adaptée du logement 22.

Il met en place le plateau de maintien 62 sur le conteneur C et applique un effort de serrage sur le conteneur C par son intermédiaire.

L'opérateur déplace ensuite le chariot CH vers l'isolateur IS. Avant de placer le conteneur sous l'isolateur, il retire le plateau de maintien 62 en l'écartant verticalement de la parie alpha, en le faisant pivoter autour de l'axe vertical de sorte à l'éloigner du conteneur, puis en le mettant en position verticale.

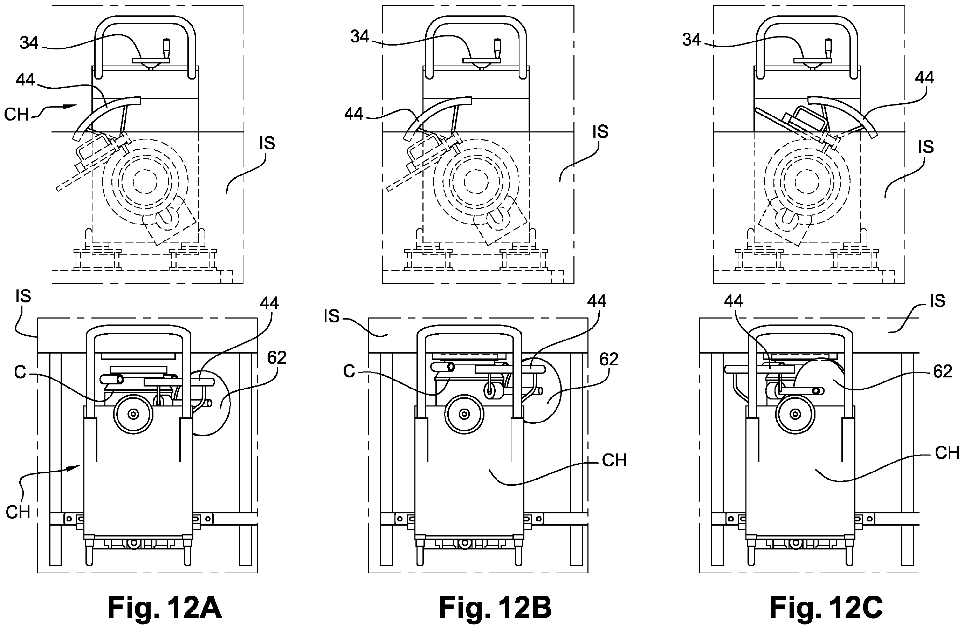

L'opérateur dispose ensuite le conteneur sous l'isolateur (figure 12A) jusqu'à ce que les tiges d'indexation viennent en butée contre les platines d'indexation fixées sur la structure support. L'axe Z2 de la partie beta est aligné à l'axe Z1 de la partie alpha et les moyens de connexion de la partie beta, par exemple des oreilles, sont alignés avec les moyens de connexion de la partie alpha, par exemple des encoches. L'opérateur peut ou non rabattre la poignée de déplacement.

L'opérateur lève ensuite le conteneur C en vue de son accostage à l'isolateur IS. Pour cela il tourne le volant ce qui provoque le levage du plateau support 16. Lorsque la partie beta est accostée sur la partie alpha (figure 12B), du fait du limiteur de couple, le levage du conteneur est automatiquement arrêté. Cet accostage se fait sans réglage ou ajustement angulaire du fait de l'orientation angulaire fixée au conteneur par le logement du chariot. Dans cette position la saille radiale 52 du logement 22 est passée au-dessus de l'extrémité libre de la tige formant butée 50.

Lors d'une étape suivante, l'opérateur fait pivoter le conteneur C en manipulant la poignée de connexion 44 solidaire du logement 22. L'opérateur déplace la poignée de connexion jusqu'à ce que la saillie radiale 52 vienne en butée contre la butée angulaire de connexion 54.2 (figure 12C).

Lors de cette rotation, les brides des parties alpha et beta sont connectées, les portes sont connectés et sont libérés des brides et peuvent être retirés de l'intérieur de l'isolateur pour mettre en communication les deux volumes.

L'opérateur peut abaisser le logement car la saillie radiale 52 a dépassé la butée verticale 50.

Cette opération d'accostage ne requiert aucun ajustement de la part de l'opérateur, il a uniquement à mettre en butée les tiges d'indexation avec les platines d'indexation. En effet le positionnement correct du conteneur dans le logement est relativement naturel, car si l'ergot n'est pas dans l'encoche adapté, le conteneur est incliné et cette inclinaison est suffisante pour alerter l'opérateur. Ceci d'autant plus que cette inclinaison empêche la mise en place correcte du plateau de maintien. Toutes les étapes sont guidées et toute fausse manipulation est empêchée.

Pour déconnecter le conteneur de l'isolateur, les portes doivent être remises en place. En considérant que le chariot soit déjà sous le conteneur C et que le logement 22 est dans la position de connexion, le logement 2 est levé pour venir supporter le conteneur C, l'ergot se loge automatiquement dans l'encoche du logement 22. Le logement 22 est ensuite pivoté dans la direction de déconnexion, jusqu'à ce que la saillie radiale 52 vienne en appui contre la butée angulaire de déconnexion 54.1.

Le logement 22 et le conteneur C peuvent être abaissés. Le chariot CH est ensuite retiré de dessous l'isolateur.

Dans un autre exemple de réalisation, le chariot peut comporter des moyens empêchant le déplacement du chariot quand le conteneur est entre la position désaccostée et la position accostée et/ou lorsque le logement est en position haute. Par exemple, le chariot peut comporter des moyens assurant une élévation de tout le chariot au moyen d'un système de pieds télescopiques, permettant de décoller les roues du chariot du sol. Dans cet exemple, il n'est alors plus requis d'avoir un logement mobile verticalement par rapport au châssis du chariot.

L'invention offre un dispositif permettant à la fois le transport, l'accostage, et le verrouillage.

Par ailleurs, la manipulation du chariot est ergonomique et limite les efforts à fournir par l'utilisateur pour réaliser une connexion entre un conteneur et une partie Alpha.

En outre l'exemple de chariot représenté et décrit en détail, est entièrement mécanique, il est très robuste et fiable.

De plus, comme cela a été expliqué ci-dessus, il est adapté à une utilisation en environnements propres, tels que ceux des productions pharmaceutiques, car il génère peu de particules et celles-ci sont contenues dans le système.

Dans l'exemple représenté, la connexion entre l'isolateur et le conteneur est obtenue par rotation du conteneur. Dans un autre exemple de réalisation, cette connexion peut être obtenue par rotation d'un ou plusieurs éléments de la partie alpha. Cette réalisation est particulièrement avantageuse, lorsque la partie alpha est motorisée, en effet son accessibilité par l'opérateur est en générale réduite. Selon un autre exemple, on pourrait envisager une rotation à la fois du conteneur et de la partie alpha.

Par ailleurs, selon un autre exemple de réalisation le chariot pourrait comporter plusieurs logements 22 pour transporter plusieurs conteneurs simultanément, assurer leur accostage et leur connexion à plusieurs parties alpha d'un ou plusieurs isolateurs.

## Revendications

1. Ensemble comportant au moins un conteneur (C) et un chariot (CH) de manipulation dudit au moins un conteneur (C) en vue de sa connexion étanche à un isolateur (IS) par des moyens de connexion étanche, ledit isolateur (IS) comportant des parois (2), un fond inférieur (4) et une structure support (5) de sorte que le fond inférieur soit à distance du sol, lesdits moyens de connexion étanche comportant une première partie sur le conteneur et une deuxième partie dans le fond inférieur de l'isolateur (IS), ledit conteneur comportant un récipient (12) d'axe longitudinal (Z2) muni à une extrémité longitudinale d'une ouverture bordée d'une bride et fermée de manière étanche par une porte (14), ladite bride présentant un axe confondu avec l'axe longitudinal (Z2) du conteneur, la bride et la porte formant la première partie des moyens de connexion étanche, ledit chariot comportant un plateau support (16) configuré pour supporter le conteneur (C) de sorte que l'axe longitudinal (Z2) du conteneur et l'axe de la bride soient orientés le long d'une direction verticale, des moyens permettant le déplacement du chariot par rapport au sol, des moyens de levage (30) le long de la direction verticale du conteneur pour faire accoster le conteneur à l'isolateur, des premiers moyens d'indexation en position (26) du chariot par rapport à l'isolateur configurés pour coopérer avec des deuxièmes moyens d'indexation en position (27) portés par la structure support de l'isolateur pour fixer la position du chariot dans le plan horizontal, de sorte que la première partie des moyens de connexion étanche portés par le conteneur et la deuxième partie des moyens de connexion étanche portés par le fond inférieur de l'isolateur soient alignés le long de la direction verticale, le chariot comportant un logement (22) configuré pour loger une extrémité longitudinale du conteneur opposée à celle comportant la bride, ledit logement étant mobile en rotation par rapport au plateau support (16) et ledit logement comportant des moyens d'orientation angulaire, et **caractérisé en ce que** les moyens d'orientation angulaire sont configurés pour fixer l'orientation angulaire du conteneur autour de la direction longitudinale du conteneur par rapport au chariot (CH) de sorte que la position du conteneur sur le chariot ne soit pas aléatoire.

2. Ensemble selon la revendication 1, comportant des moyens empêchant la mise en rotation du logement tant que le plateau support (16) n'est pas dans une position levée donnée.

3. Ensemble selon la revendication 2, dans lequel les moyens empêchant la mise en rotation du logement comportent une butée en rotation (50) configurée pour coopérer avec ledit logement, ladite butée étant telle qu'elle est escamotée lorsque le plateau support (16) est dans la position levée donnée.

4. Ensemble selon la revendication 3, comportant des moyens empêchant le plateau support de passer de la position levée donnée vers une position abaissée tant que le logement n'est pas dans une première ou une deuxième position angulaire donnée , lesdits moyens comportant une butée verticale empêchant le logement (22) de s'abaisser s'il n'est pas dans la première ou la deuxième position angulaire donnée.

5. Ensemble selon l'une des revendications 1 à 4, comportant des butées angulaires (54.1, 54.2) limitant la rotation du logement dans un premier et un deuxième sens de rotation.

6. Ensemble selon l'une des revendications 1 à 5, dans lequel les moyens de levage comportent des moyens limiteurs de couple de sorte à interrompre le levage du plateau support dès que le couple dépasse un seuil donné..

7. Ensemble selon l'une des revendications 1 à 6, comportant des moyens de maintien du conteneur sur le chariot.

8. Ensemble selon la revendication 7, dans lequel les moyens de maintien comportent des moyens configurés pour exercer un effort de serrage sur le conteneur en direction du plateau support (16).

9. Ensemble selon la revendication 8, dans lequel les moyens configurés pour exercer un effort de serrage comportent un plateau de serrage (62) configuré pour venir en appui sur une extrémité supérieure du conteneur et des moyens pour fixer la position du plateau de maintien (62) de sorte qu'il exerce un effort de serrage.

10. Ensemble selon l'une des revendications 1 à 9, dans lequel le plateau support (16) comporte des moyens élastiques configurés pour supporter au moins en partie le conteneur et assurer que la première partie des moyens de connexion soit sensiblement horizontale.

11. Ensemble selon l'une des revendications 1 à 10, dans lequel les moyens d'orientation angulaire comportent au moins une encoche ou au moins un ergot, l'encoche ou l'ergot étant porté par le logement et configuré pour coopérer avec un ergot ou une encoche porté par le conteneur.

12. Installation comportant un isolateur (IS) muni d'une zone de connexion disposée horizontalement et suspendue au-dessus du sol par une structure support et au moins un ensemble selon l'une des revendications précédentes, ladite structure support portant les deuxièmes moyens d'indexation en position configurés pour coopérer avec les premiers moyens d'indexation en position portés par le chariot (CH), de sorte que, lorsque les premiers moyens d'indexation coopèrent avec les deuxièmes moyens d'indexation, le conteneur soit aligné avec la zone de connexion.

13. Installation selon la revendication 12, en combinaison avec la revendication 4, dans laquelle la position levée donnée correspond à une position d'accostage de la zone de connexion par le conteneur.

14. Installation selon la revendication 12 ou 13, en combinaison avec la revendication 4, dans laquelle la première et la deuxième position angulaire donnée correspondent à des positions de connexion et de déconnexion du conteneur à la zone de connexion.

## Patentansprüche

1. Anordnung, die mindestens einen Behälter (C) und einen Wagen (CH) zur Handhabung des mindestens einen Behälters (C) in Hinblick auf dessen dichtes Verbinden, über dichte Verbindungsmittel, mit einem Isolator (IS) umfasst, wobei der Isolator (IS) Wände (2), einen unteren Boden (4) und eine Tragstruktur (5) umfasst, sodass sich der untere Boden in Abstand vom Boden befindet, wobei die dichten Verbindungsmittel einen ersten Teil auf dem Behälter und einen zweiten Teil im unteren Boden des Isolators (IS) umfassen, wobei der Behälter ein Gefäß (12) mit einer Längsachse (Z2) umfasst, das an einem Längsende mit einer Öffnung ausgestattet ist, die von einem Flansch umsäumt und durch eine Klappe (14) dicht verschlossen ist, wobei der Flansch eine Achse aufweist, die mit der Längsachse (Z2) des Behälters zusammenfällt, wobei der Flansch und die Klappe den ersten Teil der dichten Verbindungsmittel bilden, wobei der Wagen eine Tragplatte (16) umfasst, die so konfiguriert ist, dass sie den Behälter (C) so trägt, dass die Längsachse (Z2) des Behälters und die Achse des Flansches entlang einer vertikalen Richtung ausgerichtet sind, Mittel, die die Verlagerung des Wagens in Bezug auf den Boden ermöglichen, Mittel zum Heben (30) entlang der vertikalen Richtung des Behälters, um den Behälter an den Isolator anzudocken, erste Mittel zur Positionsindexierung (26) des Wagens in Bezug auf den Isolator, die so konfiguriert sind, dass sie mit zweiten Positionsindexierungsmitteln (27) zusammenwirken, die von der Tragstruktur des Isolators getragen werden, um die Position des Wagens in der horizontalen Ebene so zu fixieren, dass der erste Teil der vom Behälter getragenen dichten Verbindungsmittel und der zweite Teil der vom unteren Boden des Isolators getragenen dichten Verbindungsmittel entlang der vertikalen Richtung ausgerichtet sind, wobei der Wagen eine Aufnahme (22) umfasst, die so konfiguriert ist, dass sie ein Längsende des Behälters, das demjenigen, das den Flansch umfasst, gegenüberliegt, aufnimmt, wobei die Aufnahme in Bezug auf die Tragplatte (16) drehbeweglich ist und die Aufnahme Winkelausrichtungsmittel umfasst, und **dadurch gekennzeichnet, dass** die Winkelausrichtungsmittel so konfiguriert sind, dass sie die Winkelausrichtung des Behälters um die Längsrichtung des Behälters in Bezug auf den Wagen (CH) so fixieren, dass die Position des Behälters auf dem Wagen nicht willkürlich ist.

2. Anordnung nach Anspruch 1, die Mittel umfasst, die das Drehen der Aufnahme verhindern, solange sich die Tragplatte (16) nicht in einer gegebenen angehobenen Position befindet.

3. Anordnung nach Anspruch 2, wobei die Mittel, die das Drehen der Aufnahme verhindern, einen Drehanschlag (50) umfassen, der so konfiguriert ist, dass er mit der Aufnahme zusammenwirkt, wobei der Anschlag derart ist, dass er eingefahren ist, wenn sich die Tragplatte (16) in der gegebenen angehobenen Position befindet.

4. Anordnung nach Anspruch 3, die Mittel umfasst, die verhindern, dass die Tragplatte aus der gegebenen angehobenen Position in eine abgesenkte Position übergeht, solange sich die Aufnahme nicht in einer ersten oder einer zweiten gegebenen Winkelposition befindet, wobei die Mittel einen vertikalen Anschlag umfassen, der verhindert, dass sich die Aufnahme (22) absenkt, wenn sie sich nicht in der ersten oder der zweiten gegebenen Winkelposition befindet.

5. Anordnung nach einem der Ansprüche 1 bis 4, die Winkelanschläge (54.1, 54.2) umfasst, die die Drehung der Aufnahme in einer ersten und einer zweiten Drehrichtung begrenzen.

6. Anordnung nach einem der Ansprüche 1 bis 5, wobei die Hebemittel Drehmomentbegrenzungsmittel umfassen, um das Heben der Trägerplatte zu unterbrechen, sobald das Drehmoment eine gegebene Schwelle überschreitet.

7. Anordnung nach einem der Ansprüche 1 bis 6, die Mittel zum Halten des Behälters auf dem Wagen umfasst.

8. Anordnung nach Anspruch 7, wobei die Haltemittel Mittel umfassen, die so konfiguriert sind, dass sie eine Klemmkraft in Richtung der Tragplatte (16) auf den Behälter ausüben.

9. Anordnung nach Anspruch 8, wobei die Mittel, die so konfiguriert sind, dass sie eine Klemmkraft ausüben, eine Klemmplatte (62) umfassen, die so konfiguriert ist, dass sie an einem oberen Ende des Behälters in Auflage geht, und Mittel zum Fixieren der Position der Halteplatte (62) so, dass sie eine Klemmkraft ausübt.

10. Anordnung nach einem der Ansprüche 1 bis 9, wobei die Tragplatte (16) elastische Mittel umfasst, die so konfiguriert sind, dass sie den Behälter mindestens zum Teil tragen und sicherstellen, dass der erste Teil der Verbindungsmittel im Wesentlichen horizontal ist.

11. Anordnung nach einem der Ansprüche 1 bis 10, wobei die Winkelausrichtungsmittel mindestens eine Kerbe oder mindestens einen Stift umfassen, wobei die Kerbe oder der Stift von der Aufnahme getragen wird und so konfiguriert ist, dass sie bzw. er mit einem Stift oder einer Kerbe, der bzw. die vom Behälter getragen wird, zusammenwirkt.

12. Anlage, die einen Isolator (IS), der mit einem Verbindungsbereich ausgestattet ist, der horizontal angeordnet und über eine Tragstruktur über dem Boden aufgehängt ist, und mindestens eine Anordnung nach einem der vorstehenden Ansprüche umfasst, wobei die Tragstruktur zweite Positionsindexierungsmittel trägt, die so konfiguriert sind, dass sie mit den ersten Positionsindexierungsmitteln zusammenwirken, die vom Wagen (CH) getragen werden, sodass, wenn die ersten Indexierungsmittel mit den zweiten Indexierungsmitteln zusammenwirken, der Behälter mit dem Verbindungsbereich ausgerichtet wird.

13. Anlage nach Anspruch 12 in Kombination mit Anspruch 4, wobei die gegebene angehobene Position einer Position zum Andocken am Verbindungsbereich durch den Behälter entspricht.

14. Anlage nach Anspruch 12 oder 13 in Kombination mit Anspruch 4, wobei die erste und die zweite gegebene Winkelposition Verbindungs- und Trennungspositionen des Behälters mit dem Verbindungsbereich entsprechen.

## Claims

1. Assembly including at least one container (C) and a cart (CH) for manipulating said at least one container (C) with a view to sealed connection thereof to an isolator (IS) by sealed connection means, said isolator (IS) including walls (2), a bottom base (4) and a support structure (5) so that the bottom base is at a distance from the floor, said sealed connection means including a first part on the container and a second part in the bottom base of the isolator (IS), said container including a receptacle (12) with a longitudinal axis (Z2) provided at a longitudinal end with an opening bordered by a flange and sealingly closed by a door (14), said flange having an axis coincident with the longitudinal axis (Z2) of the container, the flange and the door forming the first part of the sealed connection means, said cart including a support plate (16) configured to support the container (C) so that the longitudinal axis (Z2) of the container and the axis of the flange are oriented along a vertical direction, means for moving the cart with respect to the floor, means (30) for raising the container in the vertical direction to bring the container against the isolator, first means (26) for locating the cart in position with respect to the isolator, configured to cooperate with second position-location means (27) carried by the support structure of the isolator to fix the position of the cart in the horizontal plane, so that the first part of the sealed connection means carried by the container and the second part of the seal connection means carried by the bottom base of the isolator are aligned along the vertical direction, the cart including a housing (22) configured to house a longitudinal end of the container opposite to the one including the flange, said housing being able to rotate with respect to the support plate (16) and said housing including angular orientation means, and **characterized in that** the angular orientation means are configured to fix the angular orientation of the container about the longitudinal direction of the container with respect to the cart (CH) so that the position of the container on the cart is not random.

2. Assembly according to claim 1, including means preventing the housing from being rotated as long as the support plate (16) is not in a given raised position.

3. Assembly according to claim 2, wherein the means preventing the housing from being rotated include a rotational stop (50) configured to cooperate with said housing, said stop being such that it is retracted when the support plate (16) is in the given raised position.

4. Assembly according to claim 3, including means preventing the support plate from passing from the given raised position to a lowered position as long as the housing is not in a first or second given angular position, said means including a vertical stop preventing the housing (22) from lowering if it is not in the first or second given angular position.

5. Assembly according to one of claims 1 to 4, including angular stops (54.1, 54.2) limiting the rotation of the housing in a first and second rotation direction.

6. Assembly according to one of claims 1 to 5, wherein the raising means include torque-limiting means so as to interrupt the raising of the support plate as soon as the torque exceeds a given threshold.

7. Assembly according to one of claims 1 to 6, including means for holding the container on the cart.

8. Assembly according to claim 7, wherein the holding means include means configured to exert a clamping force on the container in the direction of the support plate (16).

9. Assembly according to claim 8, wherein the means configured to exert a clamping force include a clamping plate (62) configured to come into abutment on a top end of the container and means for fixing the position of the holding plate (62) so that it exerts a clamping force.

10. Assembly according to one of claims 1 to 9, wherein the support plate (16) includes elastic means configured to at least partly support the container and to ensure that the first part of the connection means is substantially horizontal.

11. Assembly according to one of claims 1 to 10, wherein the angular orientation means include at least one notch or at least one lug, the notch or the lug being carried by the housing and being configured to cooperate with a lug or a notch carried by the container.

12. Equipment including an isolator (IS) provided with a connection zone disposed horizontally and suspended above the floor by a support structure, and at least one assembly according to one of the preceding claims, said support structure carrying the second position-location means configured to cooperate with the first position-location means carried by the cart (CH), so that, when the first location means cooperate with the second location means, the container is aligned with the connection zone.

13. Equipment according to claim 12 in combination with claim 4, wherein the given raised position corresponds to a position wherein the connection zone is contacted by the container.

14. Equipment according to claim 12 or 13 in combination with claim 4, wherein the first and second given angular position correspond to positions of connection and disconnection of the container to and from the connection zone.
